# EUROPÄISCHE PATENTANMELDUNG

(11) **EP 1 750 124 A1**
(43) Veröffentlichungstag der Anmeldung: **07.02.2007**
(21) Anmeldenummer: 06013808.8
(22) Anmeldetag: 04.07.2006
(51) Int. Cl.: G01N 29/32, G01N 29/11, G01N 29/27, A24C 5/47, G01N 33/34

(54) **Überwachung eines Leimbilds auf einem Umhüllungsstreifen mittels Ultraschall**

(30) Priorität: 03.08.2005 DE 102005037086
(71) Anmelder: Hauni Maschinenbau AG, 21033 Hamburg (DE)
(72) Erfinder: Voss, Helmut, 25551 Lockstedt (DE)
(74) Vertreter: Grebner, Christian Georg Rudolf

(57) **Zusammenfassung**

Die Erfindung betrifft eine Vorrichtung zur Ermittlung und/oder Überwachung einer auf einem Umhüllungsstreifen (15) der Tabak verarbeitenden Industrie aufgetragenen Leimmenge bzw. -masse wobei ein Ultraschallmesssystem (10) mit wenigstens zwei Ultraschall erzeugenden Quellen (13) zur Beaufschlagung des Umhüllungsstreifens (15) mit Ultraschall und mit wenigstens zwei Ultraschallsensorempfangseinheiten (14) zum Empfang von den den Umhüllungsstreifen (15) durchdringenden Ultraschallsignalen vorgesehen ist. Die Erfindung wird dadurch weitergebildet, dass jeweils zwischen den wenigstens zwei Ultraschall erzeugenden Quellen (13) und/oder zwischen den wenigstens zwei Ultraschallsensorempfangseinheiten (14) eine Trennwand (21, 31) angeordnet ist.

Ferner betrifft die Erfindung eine Maschine der Tabak verarbeitenden Industrie.

## Beschreibung

Die Erfindung betrifft eine Vorrichtung zur Ermittlung und/oder Überwachung einer auf einem Umhüllungsstreifen der Tabak verarbeitenden Industrie aufgetragenen Leimmenge bzw. Leimmasse, wobei ein Ultraschallmesssystem mit wenigstens zwei Ultraschall erzeugenden Quellen zur Beaufschlagung des Umhüllungsstreifens mit Ultraschall und mit wenigstens zwei Ultraschallsensorempfangseinheiten zum Empfang von den den Umhüllungsstreifen durchdringenden Ultraschallsignalen vorgesehen ist. Darüber hinaus betrifft die Erfindung eine Maschine der Tabak verarbeitenden Industrie.

Zur Verbindung von Zigarettenfiltern mit Tabakstöcken ist in der Regel ein Belagpapierblättchen vorgesehen, das einerseits den Filter umhüllt und andererseits mit einer überstehenden Kante ein Kopfende des Tabakstocks mit dem Filter verbindet. Das Zusammenfügen des Filters mit dem Tabakstock erfolgt in der Regel durch Verleimen.

Aus der europäischen Patentanmeldung EP-A-1 147 716 ist eine Einrichtung zum Auftragen von Leim auf ein Hüllmaterial bzw. einen Umhüllungspapierstreifen eines stabförmigen Artikels der Tabak verarbeitenden Industrie beschrieben. Um ein Leimbild mit leimfreien Bereichen auf einem Umhüllungsstreifen zu erzeugen, verfügt die Einrichtung über Mittel zum Unterbrechen der Leimzufuhr auf den Umhüllungspapierstreifen.

Bei hohen Produktionsgeschwindigkeiten an einer Filteransetzmaschine kann es vorkommen, dass die Beleimungsschicht auf den Belagpapierstreifen zu dünn aufgetragen wird oder sich Lücken oder Unterbrechungen auf Grund von prozessbedingten Störungen wie z.B. Verschmutzungen im Beleimsystem bilden, so dass keine ausreichende Verbindung zwischen dem Filter und dem Tabakstock gewährleistet ist.

Aus EP-B-0 418 342 ist eine Einrichtung zur Erfassung ausreichender Feuchte der Beleimung eines Papierstreifens beschrieben, wobei das Vorhandensein einer Beleimung auf den zu verklebenden Papierstreifen mittels eines kapazitiven Sensors erfasst wird.

Ausgehend von diesem Stand der Technik liegt der Erfindung die Aufgabe zugrunde, eine weitere Möglichkeit zur Ermittlung der Leimmenge bzw. ―masse sowie zur Überwachung einer Beleimung auf einem Umhüllungsstreifen der Tabak verarbeitenden Industrie, insbesondere in den Randbereichen des Umhüllungsstreifens, zur Verfügung zu stellen.

Diese Aufgabe wird gelöst durch eine Vorrichtung zur Ermittlung und/oder Überwachung einer auf einem Umhüllungsstreifen der Tabak verarbeitenden Industrie aufgetragenen Leimmenge bzw.

Leimmasse, wobei ein Ultraschallmesssystem mit wenigstens zwei Ultraschall erzeugenden Quellen zur Beaufschlagung des Umhüllungsstreifens mit Ultraschall und mit wenigstens zwei Ultraschallsensorempfangseinheiten zum Empfang von den den Umhüllungsstreifen durchdringenden Ultraschallsignalen vorgesehen ist, die dadurch weitergebildet ist, dass jeweils zwischen den wenigstens zwei Ultraschall erzeugenden Quellen und/oder zwischen den wenigstens zwei Ultraschallsensorempfangseinheiten eine Trennwand angeordnet ist.

Die Erfindung beruht auf dem Gedanken, dass bei einem Ultraschallmesssystem durch die Anbringung von Zwischenwänden bzw. Trennwänden zwischen zwei Ultraschallquellen und/oder zwei Ultraschallempfängern eine Beugung der ausgesendeten Strahlen oder sonstige Artfakte an dem Ultraschallmesssystem, insbesondere im Randbereich der zu prüfenden Papierbahn bzw. des zu prüfenden Umhüllungsstreifens, vermieden werden. Bei einer festen Anordnung bzw. Zuordnung von einer Schallquelle zu einem Empfänger werden durch die Trennwände Signale von benachbarten Ultraschallsendern unterdrückt bzw. abgeschirmt, so dass deutliche Signale empfangen und von einer Steuerung bzw. Auswerteeinrichtung ausgewertet werden können, wodurch insgesamt eine besonders zuverlässige Messung der Leimmenge bzw. eine Überwachung des Leimbilds auch im Kantenbereich des Umhüllungsstreifens ermöglicht ist. Durch die Zwischenwände wird somit der Ultraschall zwischen einem Ultraschallsender und dem jeweiligen Ultraschallempfänger kanalisiert bzw. ausgerichtet.

Das Messprinzip basiert darauf, dass ein Teil der ausgesendeten Ultraschallwellen vom beleimten Papierstreifen absorbiert wird und der nichtabsorbierte Teil als Messsignal am Empfangssensor zu Verfügung steht, so dass mittels Ultraschall die Leimmenge des aufgetragenen Leims quasi kontinuierlich geprüft und überwacht wird. Hierbei kann ein mit hoher Transportgeschwindigkeit geförderter und beleimter Papierstreifen auf Fehlstellen in der Beleimung untersucht werden. Das Messverfahren ist bezogen auf die aufgetragene Leimmenge ein direktes Messverfahren und unabhängig von der Zusammensetzung, z.B. dem Wasseranteil des Leims. Außerdem haben vertikale Papierschwankungen kaum Einfluss auf die empfangenen Ultraschall-Messsignale.

Der Ultraschall wird von wenigstens zwei Sendeeinheiten, beispielsweise in Form von Piezoelementen, erzeugt und von wenigstens zwei Empfangseinheiten, beispielsweise in Form von piezosensitiven Mikrophonen, empfangen. Um den geförderten Umhüllungsstreifen fortlaufend zu überwachen, wird der Umhüllungsstreifen quer zur Transportrichtung mit Ultraschall beaufschlagt, wobei der Umhüllungsstreifen zwischen der Sendeeinheit und der Sensorempfangseinheit hindurchgeführt wird. Dadurch kann der Ultraschall mit einer bevorzugten Ausrichtung auf den Umhüllungsstreifen ausgerichtet werden und den Umhüllungsstreifen durchschallen. Hierbei sind auf der beleimten oder unbeleimten Seite des Umhüllungsstreifens Ultraschall sendende Piezoelemente angeordnet. Auf der jeweils anderen Seite werden die Ultraschallwellen bzw. -signale von piezosensitiven Mikrophonen bzw. Sensoren empfangen.

Der Umhüllungsstreifen wird hierbei über seine gesamte Breite überwacht, wodurch sich alle Breiten des Umhüllungsstreifens formatfrei mit demselben Messsystem, bestehend aus einer Sendeeinheit und einer Sensorempfangseinheit, erfassen lassen. Anhand der empfangenen Ultraschallsignale werden die Leimmenge von Leimspuren eines Leimbildes, vorzugsweise im zeitlichen Mittel, erfasst und/oder fehlerhafte Bereiche des Leimbildes erkannt.

Ferner ist es günstig, wenn wenigstens eine Ultraschall erzeugende Quelle und/oder eine Ultraschallempfangseinheit zwischen zwei Trennwänden angeordnet ist.

Zuverlässige Messergebnisse sind vor allem dann gegeben, wenn die Trennwände in vorbestimmten, insbesondere regelmäßigen, Abständen zueinander angeordnet sind.

Des Weiteren ist es vorteilhaft, wenn die Höhe der Trennwand oder die Höhen der Trennwände größer als die Höhen der Ultraschall erzeugenden Quellen und/oder der Ultraschallempfangseinheiten sind. Hierdurch werden die Ultraschallwellen am Sender auf den zugehörigen Empfänger genau ausgerichtet, so dass am Empfänger keine störenden Ultraschallsignale von benachbarten Sendern empfangen werden. Wenn die Trennwände am Empfänger angeordnet sind, werden die Messung störende Ultraschallsignale von den benachbarten Sendern unterdrückt oder weitgehend vermieden.

Die Vorrichtung lässt sich leicht reinigen, wenn wenigstens eine Trennwand oder mehrere Trennwände als Baueinheit lösbar angeordnet ist, so dass zu Reinigungszwecken des Ultraschallmesssystems die Trennwände abgenommen oder entfernt werden und anschließend positionsgenau wieder fixiert werden.

Außerdem ist es vorteilhaft, wenn eine Reinigungseinrichtung für das Ultraschallmesssystem vorgesehen ist, wodurch eine Verschmutzung oder eine Veränderung der Messungen durch Ablagerungen vermieden wird.

Dazu ist es vorteilhaft, dass die Reinigungseinrichtung als Ultraschallsender und/oder als Drucklufteinrichtung ausgebildet ist. Hierdurch wird auf einfache Weise eine effektive Reinigung des Ultraschallmesssystems bzw. der einzelnen Bestandteile des Messsystems erreicht, wobei der konstruktive Aufwand gering gehalten werden kann.

Vorzugsweise ist der Umhüllungsstreifen zwischen den Ultraschall erzeugenden Quellen und den Ultraschallempfangseinheiten, die zueinander beabstandet sind, geführt. Hierzu kann das Ultraschallmesssystemmesssystem U-förmig bzw. gabelartig ausgebildet sein.

Außerdem zeichnet sich die Vorrichtung dadurch aus, dass als Ultraschall erzeugende Quellen Piezoelemente und/oder als Ultraschallsensorempfangseinheit piezosensitive Mikrophone vorgesehen sind. Auf einem Schenkel der U-Form sind wenigstens zwei Ultraschallquellen, insbesondere Piezoelemente, und auf dem anderen Schenkel der U-Form wenigstens zwei Ultraschallsensorempfangseinheiten, insbesondere piezosensitive Mikrophone, angeordnet. Bevorzugt ist eine größere Anzahl von Ultraschall aussendenden Piezoelementen, die in einem Array angeordnet sind, um ein homogenes Schallfeld über die gesamte Breite des Umhüllungsstreifens zu erhalten. Ein Array ist auch auf der Sensorempfangsseite vorteilhaft, so dass bessere Ortsauflösungen erzielbar sind.

Um eine Kompensation der Papierdicke bzw. der Dicke des Umhüllungsstreifens zu erreichen, ist eine zweite, vorzugsweise U-förmige, Sensoreinrichtung mit einer Ultraschall erzeugenden Quelle und einer Ultraschallempfangseinheit vor einem Leimauftragungsorgan für den Umhüllungsstreifen, bezogen auf die Transportrichtung des Umhüllungsstreifens, vorgesehen, wobei die zweite Sende- bzw. Empfangseinheit vorzugsweise ebenfalls Trennwände aufweist.

Ferner ist es von Vorteil, wenn eine Auswerteeinrichtung zur Auswertung der empfangenen Ultraschallsignale vorgesehen ist.

Die Vorrichtung zeichnet sich ferner dadurch aus, dass mittels des Ultraschallmesssystems die gesamte Breite des Umhüllungsstreifens überwachbar ist.

Außerdem wird die Aufgabe gelöst durch eine Maschine der Tabak verarbeitenden Industrie, die mit einer voranstehend beschriebenen erfindungsgemäßen Vorrichtung zur Ermittlung und/oder Überwachung einer auf einem Umhüllungsstreifen der Tabak verarbeitenden Industrie aufgetragenen Leimmenge bzw. ―masse, ausgestattet ist. Zur Vermeidung von Wiederholungen wird auf die obigen Ausführungen zur erfindungsgemäßen Vorrichtung ausdrücklich verwiesen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische perspektivische Darstellung eines erfindungsgemäßen Sensors.
- Fig. 2: einen Querschnitt durch ein erfindungsgemäßes Ultraschallmesssystem.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

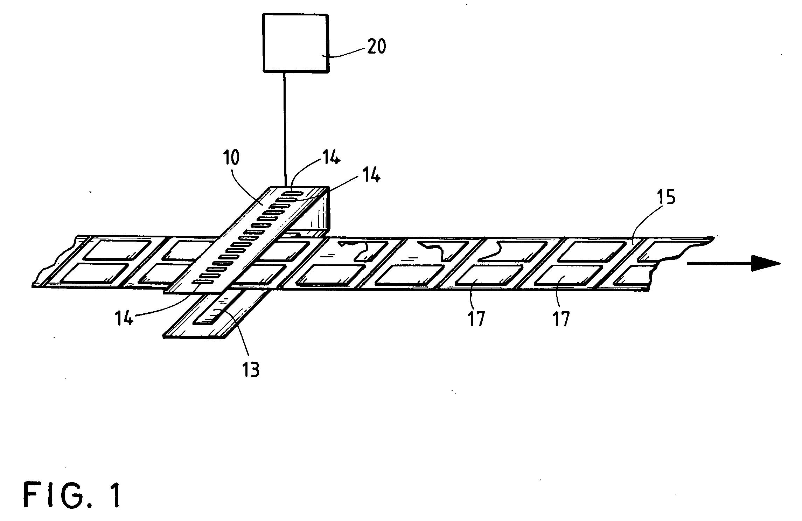

In Fig. 1 ist ein Ultraschallmesssystem 10 in einer perspektivischen Ansicht gezeigt. Das Ultraschallmesssystem 10 ist in Form einer Gabel bzw. U-Form ausgebildet. Zwischen den beiden Schenkeln der U-Form wird ein Belagpapierstreifen 15 hindurchgeführt und transportiert. Der Belagpapierstreifen 15 ist mit einem Leimbild eines aufgebrachten Leims versehen, das auf den Belagpapierstreifen 15 von einem hier nicht dargestellten Beleimungsorgan aufgebracht worden ist. Das Leimbild verfügt über mehrere leimfreie Bereiche 17, die nach Schneiden des Belagpapierstreifens 15 in Belagblättchen und nach Umwicklung der geschnittenen Belagblättchen um Filterstopfen und Tabakstöcke mit Hilfe von Bearbeitungsorganen perforiert werden.

Die Randzonen sind maßgeblich für die Verklebungen des Belagpapiers an den Tabakstock der Zigarette verantwortlich. Fehlender Leim an diesen Stellen führt zu losen bzw. abfallenden Filtern und daher ist das Aufbringen des Leims besonders wichtig. Deshalb wird stellenweise mehr Leim im Randzonenbereich als in den Mittelzonen des Leimbildes aufgetragen.

Bei Beleimungsfehlern in den Mittelzonen kann es zu Klebeproblemen im Nahtbereich der Filter kommen, die von einem nachgeschalteten pneumatischen Prüfsystem auf einer Prüftrommel indirekt aufgespürt werden können, so dass die mit einem fehlerhaften beleimten Belagpapierblättchen versehene Zigarette ausgeworfen wird. Bei den Mittelzonen gibt es sowohl durchgehende Zonen, als auch leimfreie Zonen (Bezugszeichen 17).

Je nach Leimsorte sowie Form des Leimauftragungsorgans oder anderer Prozessparameter kann es innerhalb der einzelnen Leimspuren des Leimbildes zu Überhöhungen und somit zu einer inhomogenen Verteilung des Leims über die Breite des Belagpapierstreifens 15 kommen.

Der beleimte Belagpapierstreifen 15 wird berührungslos durch das U-förmige Ultraschallmesssystem 10 geführt. Eine hier nicht dargestellte Führungseinrichtung bzw. Führung ist zusätzlich vorgesehen, um ein Flattern der Papierbahn bzw. des Belagpapierstreifens 15 zu verhindern und einen konstanten Abstand des Papierstreifens 15 zu den Sendern 131 und Empfängern 14 des Ultraschallmesssystems 10 zu gewährleisten. Auf der unbeleimten Seite befindet sich eine Sendeleiste 13 mit linear angeordneten Piezoelementen zur Erzeugung von Ultraschallwellen. Auf der gegenüberliegenden, beleimten Seite des Belagpapierstreifens 15 befindet sich eine lineare Anordnung aus Sensoren bzw. piezosensitiven Mikrophonen 14.

Die Anordnung aus den Mikrophonen 14 ist auf die Ultraschallfrequenz der Sendeleiste 13 abgeglichen. Typischerweise eignen sich für die Ermittlung der Leimmenge oder Überwachung der Leimspur bzw. auch des Leimbildes auf dem Belagpierstreifen 15 Frequenzen von über 100 kHz, bevorzugterweise über 400 kHz. Hierbei ist der von den Piezoelementen der Sendeleiste 13 erzeugte Ultraschall quer zur Transportrichtung, insbesondere senkrecht, gerichtet. Der erzeugte Ultraschall durchschallt den Belagpapierstreifen 15 sowie die überstehenden Randzonen des Belagpapierstreifens 15.

Das Ultraschallmesssystem 10 arbeitet im Impulsbetrieb, d.h. die Sendeleiste 13 sendet einen Schallimpuls, so dass die Anordnung der Mikrophone 14 die Intensität des empfangenen Schalldrucks registriert.

Je nach Dichte bzw. Flächengewicht des aufgetragenen Leims auf den Belagpapierstreifen 15 ergibt sich ein unterschiedliches Mengen- bzw. Masseprofil sowie Dichteprofil über die Breite des Belagpapierstreifens 15. Aufgrund der Amplitudenänderungen des Empfangssignals über die Breite des Belagpapierstreifens 15, die von den Mikrophonen 14 erfasst werden, wird die Menge bzw. Masse oder die Dichte des Leims über die Breite gemessen werden. Für die Auswertung der empfangenen Ultraschallsignale ist das Ultraschallmesssystem 10 mit einer Auswerteeinrichtung 20 verbunden.

Die Sendeleiste 13 und die Anordnung der Mikrophone 14 sind so ausgelegt, dass sie über die gesamte Breite des Belagpapierstreifens 15 das Leimbild bzw. die Leimmenge erfassen. Insbesondere sind sie so ausgelegt, dass sie breiter als die maximale Formatbreite eines Umhüllungsstreifens 15 sind. Dadurch lassen sich zahlreiche Breiten eines Belagpapierstreifens 15 formatfrei mit dem gleichen Messsystem 10 erfassen.

Um Einflüsse des Belagpapierstreifens 15 auf die Messungen zu eliminieren, ist vor einem Leimauftragungsorgan ein zweites Ultraschallmesssystem, das ebenfalls nach der Art des in der Zeichnung dargestellten Ultraschallmesssystems 10 gebaut ist, angeordnet. Dieses zweite Ultraschallmesssystem misst die Schwankungen und Einflüsse der Dicke eines noch nicht beleimten Belagpapierstreifens 15. Das zweite Ultraschallmesssystem ist ebenfalls mit der Auswerteeinrichtung 20 verbunden, so dass über die Differenzbildung der beiden gemessenen Ultraschallsignale vor und nach der Beleimung des Belagpapierstreifens 15 eine Kompensation der Papierdickenschwankung durch eine Differenzbildung der Signale erfolgt.

Um die Menge bzw. Masse sowie Güte der Beleimung bzw. deren zeitliche Entwicklung bzw. Tendenz über einen längeren Zeitraum erkennen zu können und so Rückschlüsse über die Klebkraft des aufgetragenen Leims zu erhalten, werden die Ultraschallsignale der Sensoren gemittelt. Leimaussetzer bzw. fehlerhafte Bereiche des Leimbildes werden durch Über- oder Unterschreitung eines Sollwertes für eine vorgegebene Leimmenge mittels des erfindungsgemäßen Ultraschallmesssystems 10 erkannt.

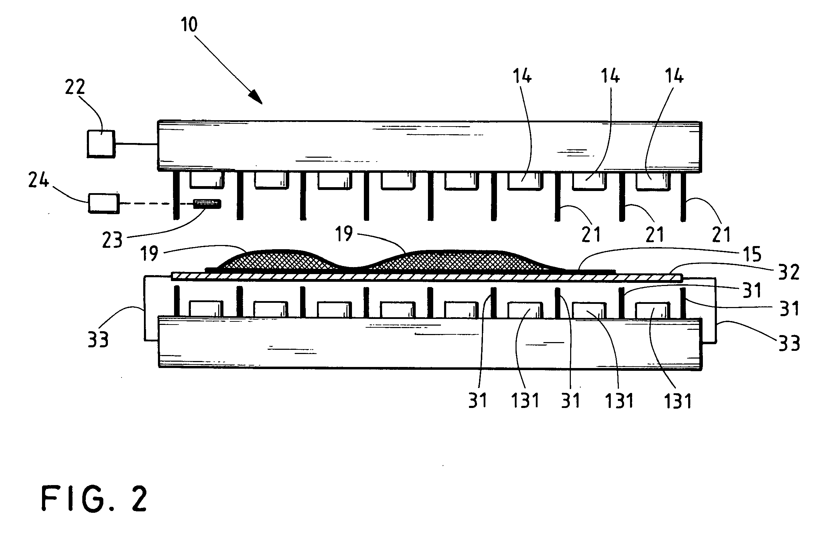

In Fig. 2 ist ein Querschnitt durch ein erfindungsgemäßes Ultraschallmesssystem 10 dargestellt. Hierbei wird der Belagpapierstreifen 15 senkrecht zur Zeichenebene zwischen der linearen Anordnung der Mikrophone 14 und der linearen Anordnung der aus Piezoelementen 131 bestehenden Sendeleiste 13 angeordnet.

Jedes Mikrophon 14 ist umgeben von zwei Trennwänden 21, wodurch Ultraschallsignale unterdrückt werden, die von den nicht gegenüberliegend(en) angeordneten Piezoelement(en) 131 ausgesendet werden. Der an den Mikrophonen 14 gemessene Ultraschall stammt somit stets vom gegenüberliegenden, zugeordneten Piezoelement 131. Die Trennwände 21 sind zueinander angeordnet, wodurch eine kammartige Struktur der Trennwände 21 entsteht.

In Fig. 2 sind ferner gegenüber den Mikrophonen 14 in regelmäßigen Abständen angeordnete Trennwände 31 auf der Sendeleiste eingezeichnet, zwischen denen jeweils ein Piezoelement 131 angeordnet ist. In dieser Anordnung der Trennwände 31 ist es ebenfalls möglich, den von den Piezoelementen 131 ausgesendeten Ultraschall zu kanalisieren bzw. entsprechend auszurichten, so dass auf der gegenüberliegenden Seite vom jeweiligen Mikrophon 14 der Ultraschall empfangen wird.

Außerdem ist zur Führung sowie Sützung des Belagpapierstreifens 15 eine Führungstange 32 oberhalb der Piezoelemente 131 angeordnet, wodurch ein Flattern des geförderten Papierstreifens 15 vermieden wird. Die Führungsstange 32 ist über zwei seitliche Halterungen 33 an der Sendeleiste befestigt.

Durch die Anordnung der Trennwände 21 auf der Empfängerseite und/oder die Anordnung der Trennwände 31 auf der Sendeseite wird erreicht, dass genaue Messungen der Dichte bzw. eine genaue Erfassung des Leimbilds 19 auf dem Belagpapierstreifen 15 durchgeführt werden. Durch die Trennwände 21 bzw. 31 ist der Ultraschall zwischen einem Paar aus einem Piezoelement 131 und einem Mikrophon 14 senkrecht zum geförderten Belagpapierstreifen 15 ausgerichtet und konzentriert.

Insbesondere werden durch die Trennwände 21 und/oder 31 am Rand der Sendeleiste bzw. Empfangsleiste die Messungen bzw. der Empfang der Ultraschallsignale genauer, da Beugungen des Ultraschalls an den äußeren Kanten des Belagpapierstreifens 15 oder andere Artefakte im Randbereich des Belagstreifens unterdrückt oder eliminiert werden.

Die Trennwände 21 bzw. 31 sind vorzugsweise als kompakte Baueinheit ausgebildet, wobei die Baueinheit zu Reinigungszwecken entfernbar von der Empfängerleiste oder der Sendeleiste ist. Nach Entfernung der Trennwände 21 bzw. 31 sind die Mikrophone und die Piezoelemente zur Entfernung von Staubpartikeln frei zugänglich.

Darüber hinaus ist es möglich, das Ultraschallmesssystem 10 auf mechanische Weise zu reinigen, wobei eine Entfernung der rippenartig bzw. kammartig angeordneten Trennwände 21 bzw. 31 nicht erforderlich ist. Um für die Reinigung einen hochenergetischen Ultraschallpuls auf die Mikrophone 14 und die dazwischen angeordneten Trennwände 21 zu geben, ist ein Ultraschallaktor 22 angeordnet.

Als Alternative oder zusätzlich zu dem Ultraschallaktor 22 kann die Reinigungseinrichtung mittels einer Luftdüse 23 ausgebildet sein, die von einer Druckluftquelle 24 mit Druckluft beaufschlagt wird. Hierdurch werden die Staubpartikel im Ultraschallmesssystem bzw. an den Trennwänden 21 weggeblasen.

### Bezugszeichenliste

- 10: Ultraschallmesssystem
- 13: Sendeleiste
- 14: Mikrophone/Sensorempfangseinheit
- 15: Belagpapierstreifen
- 17: leimfreie Zonen
- 19: Leimbild
- 20: Auswerteeinheit
- 21: Trennwand
- 22: Ultraschallaktor
- 23: Luftdüse
- 24: Druckluftquelle
- 31: Trennwand
- 32: Führungsstange
- 33: Halterung
- 131: Piezoelement

## Patentansprüche

1. Vorrichtung zur Ermittlung und/oder Überwachung einer auf einem Umhüllungsstreifen (15) der Tabak verarbeitenden Industrie aufgetragenen Leimmenge bzw. Leimmasse, wobei ein Ultraschallmesssystem (10) mit wenigstens zwei Ultraschall erzeugenden Quellen (13) zur Beaufschlagung des Umhüllungsstreifens (15) mit Ultraschall und mit wenigstens zwei Ultraschallsensorempfangseinheiten (14) zum Empfang von den den Umhüllungsstreifen (15) durchdringenden Ultraschallsignalen vorgesehen ist, **dadurch gekennzeichnet, dass** zwischen den wenigstens zwei Ultraschall erzeugenden Quellen (13) und/oder zwischen den wenigstens zwei Ultraschallsensorempfangseinheiten (14) eine Trennwand (21, 31) angeordnet ist.

2. Vorrichtung nach Anspruch 1, **dadurch gekennzeichnet, dass** wenigstens eine Ultraschall erzeugende Quelle (13) und/oder eine Ultraschallempfangseinheit (14) zwischen zwei Trennwänden (21, 31) angeordnet ist.

3. Vorrichtung nach Anspruch 1 oder 2, **dadurch gekennzeichnet, dass** die Trennwände (21, 31) in vorbestimmten, insbesondere regelmäßigen, Abständen angeordnet sind.

4. Vorrichtung nach einem der Ansprüche 1 bis 3, **dadurch gekennzeichnet, dass** die Höhe der Trennwand (21, 31) oder die Höhe der Trennwände (21, 31) größer als die Höhe der Ultraschall erzeugenden Quellen (13) und/oder der Ultraschallempfangseinheiten (14) sind.

5. Vorrichtung nach einem oder mehreren der Ansprüche 1 bis 4, **dadurch gekennzeichnet, dass** wenigstens eine Trennwand (21, 31) lösbar angeordnet ist.

6. Vorrichtung nach einem oder mehreren der Ansprüche 1 bis 5, **dadurch gekennzeichnet, dass** eine Reinigungseinrichtung (22, 23, 24) für das Ultraschallmesssystem (10) vorgesehen ist.

7. Vorrichtung nach Anspruch 6, **dadurch gekennzeichnet, dass** die Reinigungseinrichtung (22, 23, 24) als Ultraschallsender (22)und/oder als Drucklufteinrichtung (22, 23, 24) ausgebildet ist.

8. Vorrichtung nach einem oder mehreren der Ansprüche 1 bis 7, **dadurch gekennzeichnet, dass** der Umhüllungsstreifen (15) zwischen den Ultraschall erzeugenden Quellen (13) und den Ultraschallsensorempfangseinheiten (14) geführt ist.

9. Vorrichtung nach einem oder mehreren der Ansprüche 1 bis 8, **dadurch gekennzeichnet, dass** als Ultraschall erzeugende Quellen (13) Piezoelemente (13) und/oder als Ultraschallsensorempfangseinheiten (14) piezosensitive Mikrophone (14) vorgesehen sind.

10. Vorrichtung nach einem oder mehreren der Ansprüche 1 bis 9, **dadurch gekennzeichnet, dass** eine Auswerteeinrichtung (20) zur Auswertung der empfangenen Ultraschallsignale vorgesehen ist.

11. Vorrichtung nach einem oder mehreren der Ansprüche 1 bis 10, **dadurch gekennzeichnet, dass** mittels des Ultraschallmesssystems (10) die gesamte Breite des Umhüllungsstreifens (15) überwachbar ist.

12. Maschine der Tabak verarbeitenden Industrie mit einer Vorrichtung zur Ermittlung und/oder Überwachung einer auf einem Umhüllungsstreifen (15) der Tabak verarbeitenden Industrie aufgetragenen Leimmenge bzw. ―masse nach einem oder mehreren der Ansprüche 1 bis 11.
